# EUROPEAN PATENT APPLICATION

(11) **EP 3 385 895 A1**
(43) Date of publication of application: **10.10.2018**
(21) Application number: 16870895.6
(22) Date of filing: 08.09.2016
(51) Int. Cl.: G06Q 20/40, G06K 7/10

(54) **BIOMETRIC INFORMATION PERSONAL IDENTITY AUTHENTICATING SYSTEM AND METHOD USING FINANCIAL CARD INFORMATION STORED IN MOBILE COMMUNICATION TERMINAL**

(30) Priority: 01.12.2015 KR 20150169931
(71) Applicant: Hankooknfc Co., Ltd., Seoul 06643 (KR)
(72) Inventor: HWANG, Seung-Ig, Seongnam-si Gyeonggi-do 13490 (KR)
(74) Representative: Verscht, Thomas Kurt Albert
(86) International application number: PCT/KR2016/010080
(87) International publication number: WO 2017/094998

(57) **Abstract**

The present invention relates to a login system and method and, more particularly, to a biometric information personal identity authenticating system and method using financial card information stored in a mobile communication terminal, wherein the system and method: carry out biometric information registration in which login information, for each service system that is to be logged into, is mapped to biometric information of a user and stored, through a security module that is configured in the mobile communication terminal and operates independently; carry out personal identity authentication by using the biometric information of the user when logging into a registered service system so as to enable a convenient login without the input of login information, and by using digital financial card information stored in the security module when registering the biometric information; and carry out biometric information registration when the personal identity authentication is successful.

## Description

### Technical Field

The present invention relates to a login system and method and, more particularly, to a biometric information personal identity authenticating system and method using financial card information stored in a mobile communication terminal, wherein the system and method: carry out biometric information registration in which login information, for each service system that is to be logged into, is mapped to biometric information of a user and stored, through a security module that is configured in the mobile communication terminal and operates independently; carry out personal identity authentication by using the biometric information of the user when logging into a registered service system so as to enable a convenient login without the input of login information, and by using digital financial card information stored in the security module when registering the biometric information; and carry out biometric information registration when the personal identity authentication is successful.

### Background Technology

As Internet technologies, wireless communication technologies, and portable mobile devices have been developed, a ubiquitous computing environment has been established in which anyone can access the Internet via a wireless network anywhere and at any time.

Accordingly, users can collect and utilize contents providing a variety of information anywhere and at any time, and can purchase commodities such as desired goods and services anywhere and at any time, via the Internet. The contents may be, for example, text, still images, moving images, or the like.

However, since the Internet is used to provide reliably information, goods, and commodities in such a way that service providers such as content providers and merchandise sellers, and users such as information users and product buyers do not interact each other, there is a need for methods capable of authenticating the providers and the users while protecting information of the providers and the users.

Among such methods, a basic method for authenticating a user is an ID/password method including user identification information (usually called an ID) and a password (PW) for identifying the user.

Accordingly, a service system such as an application service system or a web service system that provides web sites existing on the Internet basically adopts the ID/password method.

In order to obtain desired information through such service system, users usually register their ID and password when joining the corresponding service system.

Typically, users are likely to join dozens of service systems. Therefore, it is not easy to remember the ID and password for each service system.

Consequently, the users often apply the same ID to a plurality of service systems and set only a password in a different manner.

However, the users frequently forget the set passwords, and therefore must find out the password through a complicated process such as user authentication.

As described above, since the users join a large number of service systems, there is a problem that the users often lost ID and password that has been set at the time of joining the service system.

Also, because it takes a lot of time to recover the lost ID and password, there are problems in that the users waste valuable time and also feel inconvenienced.

Also, since the ID and password are directly input by a user in such ID and password method, the ID and password are likely to be easily hacked by a third party. Therefore, it is necessary to provide a new method of high security preventing the user from forgetting or worrying about an ID and password when logging into the existing service systems.

In addition, among the existing service systems, a system installed in an agency requiring the highest level of security, such as a financial company, a communication company, or a government agency, makes a request for a public certificate issued by the government in addition to a simple ID and password. However, there is a problem in that the user must store the public certificate in his/her computer or carry the public certificate stored in his/her portable memory, resulting in inconvenience to the user. Such a problem has led to a demand for a new certificate means that can have higher security, perform personal identity authentication more definitely, and provide convenience to users, and therefore can replace the public certificate.

### Disclosure

### Technical Problem

Accordingly, the present invention has been made keeping in mind the above problems occurring in the prior art, and an object of the present invention is to provide a biometric information personal identity authenticating system and method using financial card information stored in a mobile communication terminal, wherein the system and method: carry out biometric information registration in which login information, for each service system that is to be logged into, is mapped to biometric information of a user and stored, through a security module that is configured in the mobile communication terminal and operates independently; carry out personal identity authentication by using the biometric information of the user when logging into a registered service system so as to enable a convenient login without the input of login information, and by using digital financial card information stored in the security module when registering the biometric information; and carry out biometric information registration when the personal identity authentication is successful.

Another object of the present invention is to provide a biometric information personal identity authenticating system and method using financial card information stored in a mobile communication terminal, wherein the system and method carry out financial card personal identity authentication in which a possession-based authentication means and a knowledge-based authentication means are combined, by reading out card information from a physical financial card issued to a user and owned by the user after performing personal identity authentication in a face-to-face manner or non-face-to-face manner as a personal identity authentication method when registering login information and biometric information, via an optical character recognition equipment using a camera of the mobile communication terminal, that is, an optical character reader (OCR), RF communication, or NFC communication, and by inputting card password or card validation code (CVC) of the read-out card information.

Another object of the present invention is to provide a biometric information personal identity authenticating system and method using financial card information stored in a mobile communication terminal, wherein the system and method: provide user personal information such as name or personal unique identification information (resident registration number, driver license number, social security insurance, passport, and the like) extracted from a service system that is directly input or logged into from a user via a mobile communication terminal using a personal identity authentication means, and card information including digital financial card and card password (or CVC) preregistered in the mobile communication terminal to the corresponding card company via a financial public network; generate a primary occupied authentication result by allowing the card company to verify validation of the digital financial card and perform occupied authentication; carry out secondary personal identity authentication by extracting personal information of the card owner and transmitting personal identity information including the generated primary personal identity authentication result and the extracted personal information to an identity authentication agency of national agency that collects and stores personal information in advance, and verifying whether the personal identity information received by the personal identity authentication agency matches with the personal identity authentication stored; and generate and a resulting personal identity authentication result information to provided it to the mobile communication terminal.

### Technical Solution

In order to achieve the above object, according to one aspect of the present invention, there is provided a biometric information personal identity authenticating system using financial card information stored in a mobile communication terminal, the system includes a card company system carrying out primary financial card occupied authentication in accordance with whether card information and password obtained by receiving financial card personal identity authentication message including the card information and the password matches with card information and password registered in advance and providing personal identification information including the occupied authentication result information; a card personal identity authentication server generating the financial card personal identity authentication message for the financial card information for transmission to the card company system when receiving the financial card information, and receiving personal identity authentication result information for transmission; a personal identity authentication agency receiving the personal identification information from the card company system, carrying out personal identity authentication by checking whether the received personal identification information matches with personal identification information registered, and transmitting the personal identity authentication result information to the card personal identity authentication server; and a security processor operated only by an application that is encrypted and operates independently, such that when a biometric information login registration request is generated, a biometric information login registration process is carried out in which a biometric information authentication security application is implemented, digital financial card information including card information and password of a digital financial card registered is transmitted to the card personal identity authentication server, personal identity authentication result information is received from the card personal identity authentication server, thereby completing personal identity authentication, and login server information and account information of a login server that is to be logged into by the implemented biometric information authentication security application is mapped to scanned biometric information and stored when the personal identity authentication is successful, and when a biometric information login request is generated, a biometric information login process is carried out in which the biometric information is acquired and the login server information and the account information corresponding to the acquired biometric information are loaded to allow a user to be logged into the login server.

The mobile communication terminal may include a biometric scanner for obtaining biometric information through scanning and outputting the biometric information; a controller for transmitting the biometric information login registration request signal when the biometric information login registration request is generated, transmitting the biometric information login request signal when the biometric information login request is generated, transmitting biometric information acquired by activating the biometric scanner when a biometric scan request is generated, and inputting account information in an account information input window of a login means currently displayed when the login server information and the account information are input, thereby performing automatic login; and a security processor operated only by the application that is encrypted and operates independently, such that when the biometric information login registration request signal is input from the controller, the biometric information login registration process is carried out in which the biometric information authentication security application is implemented, the login server information and the account information of the login server that is to be logged into by the implemented biometric information authentication security application are acquired, and the biometric information is mapped to the login server information and the account information and stored when making a request to the controller for biometric information scan and receiving the biometric information from controller, and when biometric information login request signal is received, the biometric information login process is carried out in which the biometric information is acquired via the controller and the login server information and the account information corresponding to the acquired biometric information are provided to the controller.

The controller may include a login monitoring unit for monitoring whether a login attempt is generated via a login means by monitoring the activated application; a biometric information login registration determination unit for making a request to select one of the biometric information login registration and the biometric information login when the login attempt is generated and checking whether the selection is performed; a registration unit for making a request for registration by transmitting the biometric information login registration request signal to the security processor and activating the biometric scanner and transmitting the biometric information acquired via the biometric scanner to the security processor upon generating the biometric scan request, when the biometric information login registration is selected via the biometric information login registration determination unit; and a login processor for performing the automatic login by inputting account information in an account information input window of a login means currently displayed upon inputting the login server information and account information are input from the security processor, when the biometric information login is selected via the biometric login registration determination unit.

The biometric information may be at least one of fingerprint information, voice feature information, vein information, facial feature information, retina information, and iris information.

In order to achieve the above object, according to another aspect of the present invention, there is provided a biometric information personal identity authenticating method using financial card information stored in a mobile communication terminal, the method include: performing, by a login monitoring unit of a controller, a login attempt monitoring step of monitoring whether a login attempt is generated via a login means; performing, by a biometric information login registration determination unit of the controller, a biometric information login registration determination step of determining whether the attempt is a biometric information simple login or a biometric information login registration when the login attempt is generated while monitoring the login attempt; performing a biometric information registration step of carrying out a biometric information login registration process in which a registration unit of a controller transmits a biometric information login registration request signal to the security processor, biometric information acquired by activating a biometric scanner is transmitted to a security processor when generating a biometric scan request from the security processor, the security processor performs personal identity authentication via a card personal identity authentication server unit, a card company system, and an personal identity authentication agency, and the biometric information is mapped to login server information and account information and stored in a security area when the personal identity authentication is successful, when the biometric information login registration is determined as a result of the determination step; and performing a biometric information simple login step of performing automatic login by causing a login processor of the controller to transmit a biometric information login request signal to the security processor, transmit biometric information acquired by activating the biometric scanner to the security processor when the biometric scan request is generated, and input the login server information and the account information received from the security processor in an account information input window of a login means currently displayed, when the biometric information simple login is determined as a result of the determination step.

The biometric information registration step may include performing, by the registration unit of the controller, a biometric information login request step of transmitting the biometric information login registration request signal when the biometric information login registration is determined as a result of the determination step; performing, by the security processor, a biometric scan request step of implementing a biometric information authentication security application, acquiring the login server information and the account information of a login server that is to be logged into by the implemented biometric information authentication security application, and then making a request to the login processor to scan the biometric information, when a biometric login registration request signal is received from the login processor; performing, by the registration unit, a biometric information provision step of transmitting biometric information obtained by activating the biometric scanner to the security processor when the biometric scan request is generated; performing, by the security processor, a personal identity authentication carrying-out step of carrying out personal identity authentication via the card personal identity authentication server unit, the card company system, and the personal identity authentication agency and determining whether the identity authentication is successful or not in accordance with personal identity result information for personal identity authentication carried out by the personal identity authentication agency; and performing, by the security processor, a registration step of inputting the biometric information and allowing the biometric information to be mapped to the login server information and the account information and stored when the personal identity authentication is successful in the personal identity authentication determination step.

The biometric information simple login step may include performing, by the login processor of the controller, a biometric information simple login request step of transmitting the biometric information login request signal to the security processor and making a request for the biometric information login when the biometric information simple login is determined as a result of the determination step; performing, by the security processor, a login process information acquiring step of implementing biometric information authentication security application when making a request for biometric information login and making a request to the login processor for the biometric information scan by the implemented biometric information authentication security application; performing, by the login processor, a biometric information provision step of receiving the biometric scan request form the security processor to activate the biometric scanner, and transmitting the biometric information acquired via the biometric scanner to the security processor; performing, by the security processor, a login process information provision step of receiving the biometric information from the login processor and providing the login server information and the account information corresponding to the received biometric information from the login processor to the login processor; and performing, by the login processor, a login step of performing the automatic login by inputting the login server information and the account information input from the security processor in the account information input window of the login means currently displayed.

The personal identity authentication carrying-out step may include performing, by the security processor, a registration card checking step of determining whether there is a digital financial card registered; performing a card information provision step of transmitting digital financial card information including card information for the registered digital financial card to the card personal identity authentication server when there is the digital financial card, and transmitting physical financial card information including the card information acquired for the physical financial card via a financial card information reader including at least one of a near frequency communication (NFC), RF communication, and OCR, to the card personal identity authentication server when there is no the digital financial card; performing, by the card personal identity authentication server, a personal identity request step of generating financial card personal identity authentication message including the received card information to be transmitted to the card company, and making a request for personal identity authentication; performing, by the card company system, a primary authentication step of carrying out a primary card occupied authentication by checking whether personal identification information corresponding to the card information included in the financial card personal identity authentication message is registered in advance, and transmitting the personal identification information of financial card owner including occupied authentication success information (value) to the personal identity authentication agency so as to transmit the occupied authentication result information to the personal identity authentication agency when the occupied authentication is successful; and performing, by the personal identity authentication agency, a secondary authentication step of receiving the occupied authentication result information according to the primary occupied authentication from the card company system, transmitting personal identity authentication failure to the mobile communication terminal via the card personal identity authentication server when the occupied authentication is not successful, checking whether personal identification information that is matched with the personal identification information received from the card company system is registered in advance when the occupied authentication is successful, thereby carrying out secondary personal identity authentication, and transmitting the personal identity authentication result to the security processor via the card personal identity authentication server.

The personal identity authentication request step may include: a card type determination step of determining whether the received card information is the card information for the physical financial card; an encryption determination step of checking whether the card information is encrypted when the card type is the physical financial card; a decryption step of decrypting the encrypted card information when the card information is encrypted; and a personal identity authentication message transmitting step of generating the financial card personal identity authentication message using the decrypted card information to be transmitted to the card company system.

The biometric information may be at least one of fingerprint information, voice feature information, vein information, facial feature information, retina information, and iris information.

### Advantageous Effects

The present invention is provided such that a login information (account information) ID and a password for a service system that the user has joined as a member are mapped to biometric information obtained by a reliable way of personal identity authentication, and registered into a security mode of high security, and are thereby used to be logged into a service system only using the biometric information. Therefore, there are advantages in that the present invention allows the user not to memorize or input an ID and a password for each service system, and thus improves a security of the biometric information login while providing convenience to the user.

In addition, there are advantages in that the present invention allows information for service system to be accessed via the security module and biometric information of the user to be acquired and stored in security storage, thereby preventing login information and biometric information of user from being released.

### Description of Drawings

FIG. 1 is a diagram illustrating a configuration of a biometric information personal identity authenticating system using financial card information stored in a mobile communication terminal according to the present invention.
FIG. 2 is a diagram illustrating a configuration of a mobile communication terminal of a biometric information personal identity authenticating system using financial card information stored in a mobile communication terminal according to the present invention.
FIG. 3 is a flow diagram illustrating a biometric information login registration method in a biometric information personal identity authenticating method using financial card information stored in a mobile communication terminal according to the present invention.
FIG. 4 is a flow diagram illustrating a personal identity authenticating method of a biometric information personal identity authenticating method using financial card information stored in a mobile communication terminal according to the present invention.
FIG. 5 is a flow diagram illustrating a simple login processing method of a biometric information personal identity authenticating method using financial card information stored in a mobile communication terminal according to the present invention.

### Best Mode

Hereinafter, with reference to the accompanying drawings, configuration and operation of a biometric information personal identity authenticating system using financial card information stored in a mobile communication terminal according to the present invention will be described, and then a biometric information personal identity authenticating method using the financial card information stored in the mobile communication terminal of the system will be described.

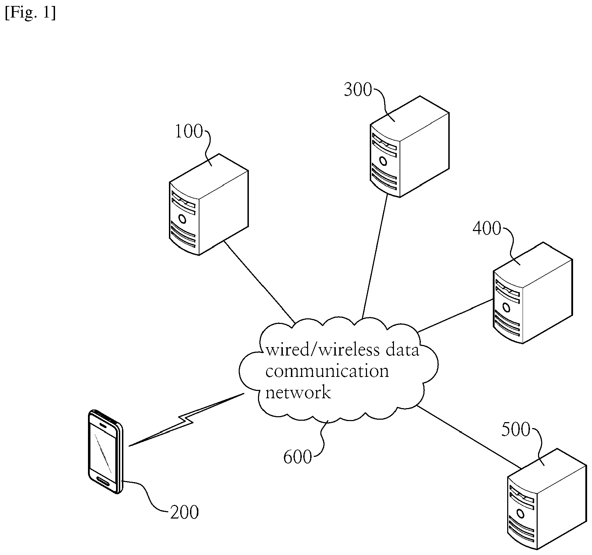

FIG. 1 is a diagram illustrating a configuration of a biometric information personal identity authenticating system using financial card information stored in a mobile communication terminal according to the present invention.

Referring to FIG. 1, the biometric information personal identity authenticating system using financial card information stored in the mobile communication terminal includes a mobile communication terminal 200, a card personal identity authentication server 300, a card company system 400, and a personal identity authentication agency 500, and may further include a login server 100 of a service system.

The login server 100 of the service system, the mobile communication terminal 200, the card personal identity authentication server 300, the card company system 400, and the personal identity authentication agency 500 are connected via one of wired and wireless over wired/wireless data communication network 600 to perform data communication.

The wired/wireless data communication network 600 may include one or more of an Internet network including a WiFi network, a mobile communication network including 3G, 4G, and 5G, a WiBro network, and the like.

Most web sites and application sites make a request to a user to log into the site, in order to use all of the services provided by the corresponding sites. That is, a service system providing any service such as information providing service or a goods sale service requires a user's login so as to protect and manage the user's information, and thus include a login server 100 for performing the login.

In the case of the ID/password login method, the login server 100 stores login information including an identification (ID) and a password (PW) of a user who has joined as a member, compares login information input by making a request for login information including the ID and password at the time of the login with login information registered in advance, performs authentication according to whether they match with each other or not, and logs a user terminal of the corresponding user into the service system. Also, the login server 100 to which a public certificate scheme is applied has registered a public certificate, to make it possible to perform authentication by the public certificate, and the user may be logged into the service system when the authentication is successful.

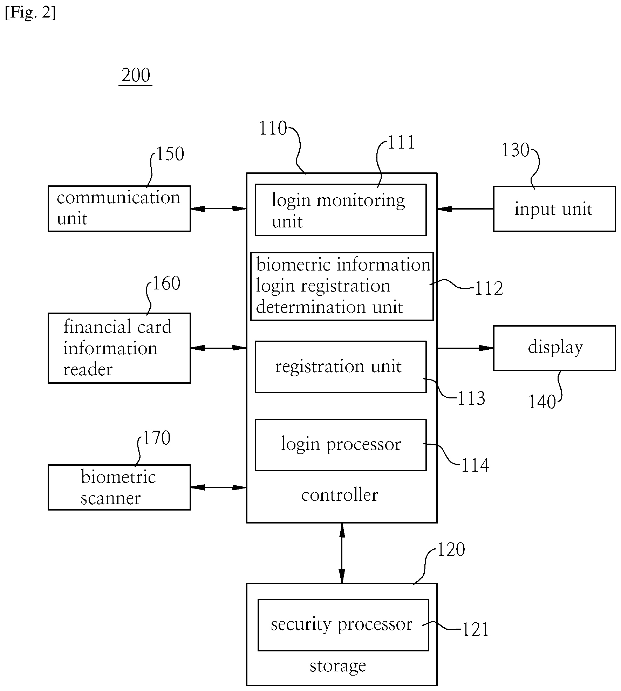

The mobile communication terminal 200 is a terminal called a tablet PC, a smart phone, a smart pad, or the like, and performs overall operations related to biometric information login according to the present invention. A detailed structure and operation of the mobile communication terminal 200 will be described referring to FIG. 2.

The card company system 400 issues a physical financial card, a digital financial card, and the like to users, and stores financial card issuance information including card owner's personal information, card information, and password for the issued financial card. The card company system 400 performs a primary occupied authentication according to whether there is personal identity information mapped to the financial card issuance information acquired and managed at the time of the issuance and stored, in correspondence with card information of the financial card personal identity authentication information received when a request for the personal identity authentication is generated by receiving the financial card personal identity authentication message according to the present invention, and generates personal identification information including the card owner's personal information for the card information and the primary occupied authentication result when the primary occupied authentication is successful and then provides them to the personal identity authentication agency 500.

Further, the financial card personal identity authentication information may include personal information, in which the personal information may be directly input from the user through the mobile communication terminal 200 and extracted by account information from the login server 100.

The card personal identity authentication server 300 relays personal identity authentication using the financial card according to an embodiment of the present invention.

Specifically, the card personal identity authentication server 300 receives one of the physical financial card information for the physical financial card and the digital financial card information for the digital financial card from the mobile communication terminal 200.

When the received financial card information is the physical financial card information, the card personal identity authentication server 300 checks whether the physical financial card information is encrypted in a secure application/access module (SAM). The card personal identity authentication server 300 decrypts the SAM to generate the financial card identity authentication message and transmits it to the card company system 400 when the information is encrypted in SAM, and generates the financial card personal identity authentication message using just physical financial card information and transmits it to the card company system 400 when the information is a plain text that is not encrypted in SAM.

In addition, when the received financial card information is financial card information, the card personal identity authentication server 300 immediately generates the financial card personal identity authentication message and transmits it to the card company system 400.

The personal identity authentication agency 500 is an organization that is authorized to carry out personal identity authentication by collecting and storing personal information from a national agency and changing personal unique identification information to a secure alternative means, and constructs a database by collecting personal identification information of users through legal procedures in advance and manages the personal identification information of the constructed database. The personal identification information may include personal information and personal identity authentication result. The personal identity authentication result may be, for example, connecting information (CI), duplication information (DI), and the like.

The personal identity authentication agency 500 according to the present invention receives personal identification information of the card owner extracted by the card information and normal card notification from the card company system 400, and carries out personal identity authentication by comparing the personal identification information of the card owner with the personal identification information that is stored and managed in advance and checking whether there is the matched personal identification information.

After carrying out the personal identity authentication, the personal identity authentication agency 500 determines whether the authentication is successful, and provides a personal identity authentication success notification signal including the personal identity authentication result according to whether the authentication is successful to security processor 121 of the mobile communication terminal 200 through the card personal identity authentication server 300.

FIG. 2 is a diagram illustrating a configuration of a mobile communication terminal of a biometric information personal identity authenticating system using financial card information stored in a mobile communication terminal according to the present invention.

The mobile communication terminal 200 includes a controller 110, a security processor 121, and a biometric scanner 170, and further includes storage 120, an input unit 130, a display 140, a communication unit 150, and a financial card information reader 160 according to an embodiment.

The controller 110 controls the overall operation of the mobile communication terminal 200 according to the present invention. The detailed configuration and operation of the controller 110 will be described later.

The storage 120 includes a program area that stores a control program for controlling an operation according to the present invention, a temporary area that temporarily stores data generated while executing the control program, and a data area that stores the control program and data generated by a user.

The security processor 121 is a security module such as "KNOX" of Samsung which is provided with an independent control means and includes an independent secure memory area. The security processor 121 is operated by an independent application (hereinafter the independent application will be referred to as "security application"), to encrypt data and store the data in the secure memory area (or "security area").

The security processor 121 processes the data stored in the secure memory area only through the security application and outputs the data to the outside, and encrypts data input from the outside and stores the encrypted data in the secure memory area.

Although the security processor 121 is shown as being included in the storage unit 120 because it has a secure memory area, it may be configured separately from the storage 120.

The security processor 121 according to the present invention implements a biometric information authentication (security) application when receiving a signal for making a request for biometric information login registration from the controller 110, and acquires login server information and account information of a login server 100 that is to be logged into by the implemented biometric information authentication (security) application.

In addition, the security processor 121 make a request to the controller 110 to scan biometric information when acquiring the login server information and the account information, receives the biometric information from the controller 110 in response thereto, and allows the biometric information to be mapped to the login server information and the account information and be stored, thereby performing a biometric information login registration process for a user. The login server information may be obtained from information recorded in a cookie of a web surfing application such as Internet Explorer, or may be directly input from a user. The login server information may include address information such as a web address and an IP address of a login server, account information input window location information of a login means of a login server, and the like.

In addition, the security processor 121 carries out biometric information login process that acquires biometric information via the controller 110 when receiving the signal for making a request for a biometric information login from the controller 110 and provides the login server information and the account information corresponding to the acquired biometric information to the controller 110.

In addition, the security processor 121 carries out personal identity authentication via the card personal identity authentication server 300, the card company system 400, and the personal identity authentication agency 500, when acquiring the login server information and the account information or when making a request for a biometric information registration.

In addition, the security processor 121 determines whether there is a digital financial card registered when the personal identity authentication process is performed, in which the security processor transmits digital financial card information for the digital financial card to the card personal identity authentication server 300 when it is determined that there is the registered digital financial card, and acquires card information of the physical financial card via the financial card information reader 160 and transmits physical financial card information including the acquired card information to the card personal identity authentication server 300 when it is determined that there is no registered digital financial card.

The input unit 130 includes one or more of a button input device that is provided with a plurality of buttons performing different functions and outputs a button signal corresponding to a button pressed, a key input device that is provided with a plurality of keys for inputting a plurality of characters and selecting a function and outputs a key signal corresponding to a key pressed, a mouse that displays a cursor and outputs a scroll signal for causing the cursor to be moved in accordance with front and rear movements and left and rightward movements, a touch pad that is integrally constructed with a screen of the display 140 and outputs a positional signal corresponding to the touched position, and the like to allow the user to input information and select a function.

The display 140, as a display device such as a liquid crystal display (LCD), displays operation states of the mobile communication terminal 200 under a control of the controller 110 and the security processor 121, displays a user graphic interface means corresponding to the operation states and the implemented application, and displays various contents such as text, graphic, still image, moving image, and the like via the displayed user graphic interface means.

The communication unit 150 is connected via one of wired and wireless over the wired/wireless data communication network 600 to carry out data communication with other devices and systems connected to the wired/wireless data communication network 600.

The financial card information reader 160 is a device such as a near field communication (NFC), a magnetic reader of a magnetic secure transmission (MST) type (or "RF type"), an optical character reader (OCR), and the like, which reads and outputs card information from the physical financial card.

The biometric scanner 170 scans a user's body for biometric information to generate biometric information and provides the generated biometric information to the controller 110. The biometric information may be fingerprint information, iris information, vein information, voice information, facial feature information, palm line information, retina information, and the like. In particular, the fingerprint information or the iris information is preferably used as the biometric information. Accordingly, the biometric scanner 170 may include at least one of a fingerprint scanner, an iris scanner, a vein scanner, a facial feature recognition unit (face scanner) including a camera, a palm line scanner, a retina scanner, and a voice microphone.

The controller 110 includes a login monitoring unit 111, a biometric information login registration determination unit 112, a registration unit 113, and a login processor 114.

The login monitoring unit 111 monitors whether the user graphic interface means including the login means is activated, whether a cursor of a mouse is located or clicked in an account information input window of the login means, and whether a login request menu, a login request button, and the like are clicked to activate the login means, thereby checking whether a login attempt occurs.

The biometric information login registration determination unit 112 makes a request to the user to select one of the biometric information login registration and the biometric information login by displaying a biometric information login selection means including a message that asks whether to register or carry out the biometric information login for the service system providing a login server that is to be accessed when the login attempt is detected via the login monitoring unit 111, and determines whether the selection is biometric information login registration or the biometric information login according to user's selection.

When the biometric information login registration request is generated by selecting the biometric information login registration via the biometric information login registration determination unit 112, the registration unit 113 makes a request for registration by activating the biometric scanner 170 and transmitting the biometric information acquired from the biometric scanner 170 to the security processor 121 when the biometric scan requests is generated from the security processor 121 by transmitting the biometric information login registration request signal to the security processor 121.

When the biometric information login request is generated by selecting the biometric information login via the biometric information login registration determination unit 112, the login processor 114 performs automatic login to the corresponding login server 100, that is, service system by inputting account information in an account information input window of a login means that is currently displayed when login server information and account information are input from the security processor 121 in response to the biometric information login request signal transmitted to the security processor 121.

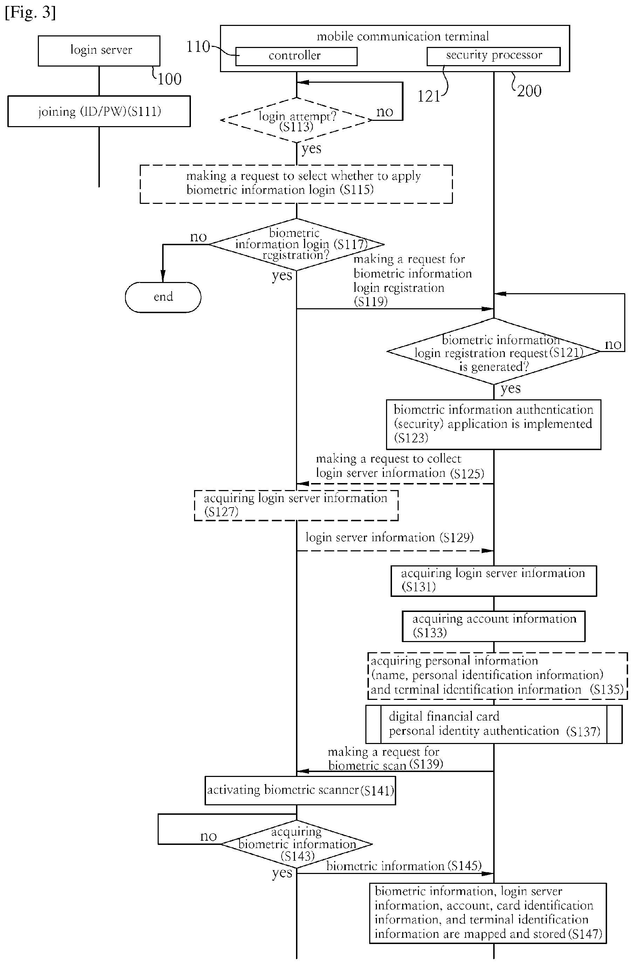

FIG. 3 is a flow diagram illustrating a biometric information login registration method in a biometric information personal identity authenticating method using financial card information stored in a mobile communication terminal according to the present invention. Referring to FIG. 3, a simple login registration method will be described hereinafter.

First, a user of the mobile communication terminal 200 should register an ID and a password in a service system providing the login server 100 to join the service system as a member (Sill).

The login monitoring unit 111 of the controller 110 in the mobile communication terminal 200 monitors whether a login attempt is generated (S113).

When the login attempt is generated during the login attempt monitoring, the login monitoring unit 111 activates the biometric information login registration determination unit 112, in which the activated biometric information login registration determination unit 112 displays, a biometric information login selection means for making a request to select a biometric information login registration or a biometric information login, in a display 140 (S115), and checks which one of the biometric information login registration or the biometric information login is selected (S117). However, the procedures for making a request to select the biometric information login registration or the biometric information login and selecting one of the biometric information login registration or the biometric information login may be not included. This is because the present invention may be configured such that the user carries out the biometric information login by directly pressing a biometric information login registration button.

When the biometric information login registration is selected, the registration unit 113 activated by the biometric information login registration determination unit 112 transmits the biometric information login registration request signal to the security processor 121 (S119).

While monitoring whether the biometric information login registration request is generated (S121), the security processor 121 implements a biometric information authentication (security) application when the biometric information login registration request signal is received from the registration unit 113 of the controller 110 (S123).

When the biometric information authentication security application is implemented, the security processor 121 may acquire the login server information by directly collecting the login server information including login server access address, account information input window position of login means, and the like (S131), or by transmitting the login server information request signal to the registration unit 113 of the controller 110 and then receiving the login server information collected by the registration unit 113 (S125, S127, S129, S131).

The security processor 121 acquires account information when the login server information is collected (S133). The account information may be acquired from a cookie administered by the web surfing application when the login means is provided via a web surfing application such as an Internet explorer, or directly input by the user.

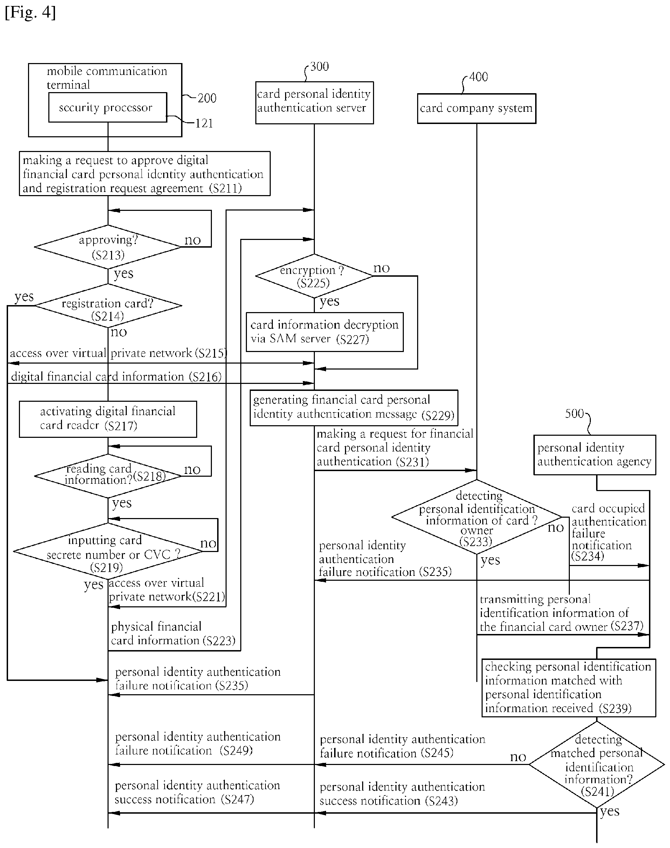

When the account information is acquired, the security processor 121 carries out digital financial card personal identity authentication by implementing a digital financial card personal identity authentication routine (S137), and transmits a biometric scan request signal to the controller 110 when the personal identity authentication is successful (S139). A personal identity authenticating method using digital financial card according to the present invention will be described in detail referring to FIG. 4.

The registration unit 113 receiving the biometric information request signal activates the biometric scanner 170 (S141), and checks whether the biometric information is input from the biometric scanner 170 (S143).

When the biometric information is input, the registration unit 113 transmits the biometric information to the security processor 121 (S145).

The security processor 121 receiving the biometric information allows the login server information and the account information to be mapped to the biometric information and stored, resulting in completion of a biometric information login registration process (S147).

The security processor 121 may further acquire terminal identification information and personal information including user name, personal identification information, and the like, after the login server information and the account information are acquired (S135). The acquired personal information and terminal identification information may be also mapped to the biometric information and stored.

FIG. 4 is a flow diagram illustrating a personal identity authenticating method in a biometric information personal identity authenticating method using financial card information stored in a mobile communication terminal according to the present invention.

Referring to FIG. 4, the security processor 121 of the mobile communication terminal 200 displays a digital financial card personal identity authentication and registration request agreement approval means and makes a request to the user to approve the agreement (S211).

The security processor 121 checks whether the user approves the agreement after making a request to approve the agreement (S213), and determines whether there is the digital financial card that is registered in a security region when the user approves the agreement (S214).

When there is the registered card, the security processor 121 accesses the card personal identity authentication server 300 over a virtual private network (VPN) (S215), and then generates the digital financial card information for one digital financial card selected and transmits it to the card security authentication server unit 300 (S216).

Meanwhile, when there is no digital financial card registered in the security region, the security processor 121 activates the financial card information reader 160 (S217), and checks whether the card information is read out from the activated financial card information reader 160 (S218).

When the card information is read out, the security processor 121 makes a request to the user to input a password by displaying a password (or CVC) input means via the display unit 140, and check whether at least one of password and CVC is input via the password input means (S219).

When the password (including one or more of card password and CVC) is input, the security processor 121 accesses the card personal identity authentication server 300 over a virtual private network in wired/wireless data communication network via the communication unit 150 (S221), and transmits a physical financial card information including the card information that is read out and the input password to the card personal identity authentication server 300 (S223). When the mobile communication terminal 200 is a terminal to which SAM is applied, the physical financial card information may be encrypted in SAM. The SAM technology is a technique well known to those skilled in the art, so a detailed description thereof will be omitted.

When the physical financial card information is received from the security processor 121, the card personal identity authentication server 300 determines whether the SAM encryption is applied to the physical financial card information (S225), decrypts the physical financial card information via the SAM server when the SAM encryption is applied (S227), generates a financial card personal identity authentication message (S229), and then transmits it to the card company system 400 (S231).

After receiving the financial card personal identity authentication message, the card company system 400 detects personal identification information for the financial card of financial card information included in the financial card personal identity authentication message by comparing the financial card information included in the financial card personal identity authentication message with card information and password of financial card owner that has already been registered. At this time, the card company system 400 carries out the primary occupied authentication by checking whether the personal identification information is detected, and determines whether the occupied authentication is successful (S233).

When the personal identification information is not detected, the card company system 400 transmits, to the personal identity authentication agency, a card occupied authentication failure notification signal notifying that the card occupied authentication has failed (S234). Meanwhile, when the personal identification information is detected, the card company system 400 transmits the personal identity authentication request information including personal identification information of the financial card owner to the personal identity authentication agency 500 (S237).

After receiving the card occupied authentication failure notification signal, the personal identity authentication agency 500: transmits the personal identity authentication failure notification signal notifying that personal identity authentication has failed, to the card personal identity authentication server 300 (S235); compares personal identification information of the received personal identity authentication request information with personal identification information that has already been registered and then checks whether there is the matched personal identification information when the personal identity authentication request information is received from the card company system 400 (S239); and determines whether the personal identification information is registered according to the matched personal identification information to determine whether the personal identity authentication is successful (S241).

The personal identity authentication agency 500 transmits the personal identity authentication failure notification signal to the card personal identity authentication server 300 when the personal identity authentication has failed (S245), and transmits the personal identity authentication success notification signal to the card personal identity authentication server 300 when the personal identity authentication is successful (S243).

After receiving the personal identity authentication success notification signal or the personal identity authentication failure notification signal, the card personal identity authentication server 300 stores log (history) information for the corresponding personal identity authentication, and then transmits the personal identity authentication success notification signal or the personal identity authentication failure notification signal for the received signal to the security processor 121 of the mobile communication terminal 200 (S247, S249).

The personal identity authentication success notification signal may include personal identity result that is CI/DI value.

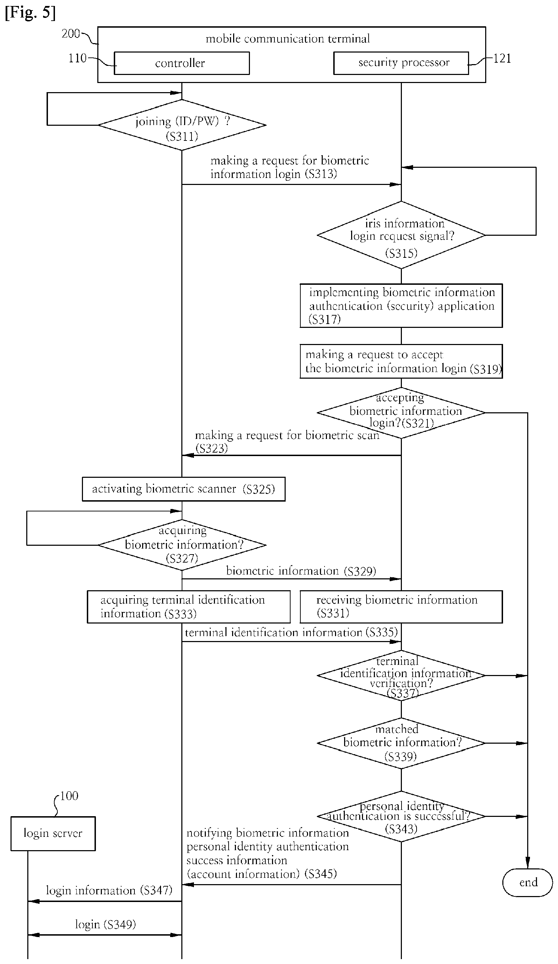

FIG. 5 is a flow diagram illustrating a simple login processing method in a biometric information personal identity authenticating method using financial card information stored in a mobile communication terminal according to the present invention.

Referring to FIG. 5, the controller 110 of the mobile communication terminal 200 checks whether a login attempt is detected (S311).

When the login attempt is detected, the controller 110 transmits the biometric information login request signal to the security processor 121 (S313).

When the biometric information login request signal is received from the controller 110 while monitoring whether the biometric information login request signal is received (S315), the security processor 121 implements the biometric information authentication (security) application (S317) and makes a request to a user to accept the biometric information login by displaying a biometric information login approval request means in the display unit 140 (S319).

After requesting the user to accept the biometric information login, the security processor 121 checks whether the user accepts the biometric information login (S321), and transmits the biometric scan request signal to the controller 110 when the user accepts the login (S323).

The controller 110 receiving the biometric scan request signal activates the biometric scanner 170 (S325), and checks whether the biometric information is input via the activated biometric scanner 170 (S327).

When the biometric information is input from the biometric scanner 170, the controller 110 transmits the biometric information to the security processor 121 (S329).

The security processor 121 receiving the biometric information stores the biometric information in its own security memory area (S331).

The security processor 121 compares the stored biometric information with the biometric information registered in advance and determines success or failure in accordance with whether there is the matched information (S339). Herein, the security processor 121 completes the process at the time of the failure, and allows login server information and account information corresponding to the stored biometric information to be loaded and transmitted to the controller 110 at the time of the success (S345).

Then, the controller 110 inputs the account information in an account information input window of a login means of a position corresponding to position information in the account information input window of the login means included in the login server information, and then transmits the login information including the account information to the login server 100 (S347), thereby allowing the user to be logged into the login server 100 (S349).

According to an embodiment, the controller 110 transmitting the biometric information may be configured to acquire the terminal identification information (S333), and then provide it to the security processor 121 (S335).

Then, the security processor 121 may compare the received terminal identification information with the terminal identification information that is registered in advance, and further carry out terminal identification information verification in accordance with whether there is the matched information (S337).

Further, the security processor 121 may be configured to carry out physical financial card personal identity authentication (S341) according to the process described above referring to FIG. 4, and provide the login server information and the account information to the controller 110 (S345) in accordance with whether the personal identity authentication is successful or not (S343).

According to an embodiment of the present invention, when the card personal identity authentication server 300 transmits substitute information, the security processor 121 may be configured to carry out personal identity authentication using the substitute information.

It will be readily understood by those of ordinary skill in the art that the present invention is not limited to the exemplary embodiments described above, but various improvements, alterations, substitutions, or additions can be made in the present invention without departing from the spirit and scope of the invention as defined in the appended claims. If such improvements, alterations, substitutions, or additions are within the scope of the following claims, the technical idea thereof is to be regarded as being within the scope of the present invention.

### Description of the Reference Numerals in the Drawings

100: login server 110: controller
111: login monitoring unit 112: biometric information login registration determination unit
113: registration unit 114: login processor
120: storage 121: security processor
130: input unit 140: display
150: communication unit 160: financial card information reader
170: biometric scanner 200: mobile communication terminal
300: card personal identity authentication server 400: card company system
500: personal identity authentication agency

## Claims

1. A biometric information personal identity authenticating system using financial card information stored in a mobile communication terminal, the system comprising:
a card company system carrying out primary financial card occupied authentication in accordance with whether card information and password obtained by receiving financial card personal identity authentication message including the card information and the password matches with card information and password registered in advance and providing personal identification information including the occupied authentication result information;
a card personal identity authentication server generating the financial card personal identity authentication message for the financial card information for transmission to the card company system when receiving the financial card information, and receiving personal identity authentication result information for transmission;
a personal identity authentication agency receiving the personal identification information from the card company system, carrying out personal identity authentication by checking whether the received personal identification information matches with personal identification information registered, and transmitting the personal identity authentication result information to the card personal identity authentication server; and
a security processor operated only by an application that is encrypted and operates independently, such that when a biometric information login registration request is generated, a biometric information login registration process is carried out in which a biometric information authentication security application is implemented, digital financial card information including card information and password of a digital financial card registered is transmitted to the card personal identity authentication server, personal identity authentication result information is received from the card personal identity authentication server, thereby completing personal identity authentication, and login server information and account information of a login server that is to be logged into by the implemented biometric information authentication security application is mapped to scanned biometric information and stored when the personal identity authentication is successful, and when a biometric information login request is generated, a biometric information login process is carried out in which the biometric information is acquired and the login server information and the account information corresponding to the acquired biometric information are loaded to allow a user to be logged into the login server.

2. The system according to claim 1, wherein the mobile communication terminal includes:
a biometric scanner for obtaining biometric information through scanning and outputting the biometric information;
a controller for transmitting the biometric information login registration request signal when the biometric information login registration request is generated, transmitting the biometric information login request signal when the biometric information login request is generated, transmitting biometric information acquired by activating the biometric scanner when a biometric scan request is generated, and inputting account information in an account information input window of a login means currently displayed when the login server information and the account information are input, thereby performing automatic login; and
a security processor operated only by the application that is encrypted and operates independently, such that when the biometric information login registration request signal is input from the controller, the biometric information login registration process is carried out in which the biometric information authentication security application is implemented, the login server information and the account information of the login server that is to be logged into by the implemented biometric information authentication security application are acquired, and the biometric information is mapped to the login server information and the account information and stored when making a request to the controller for biometric information scan and receiving the biometric information from controller, and when biometric information login request signal is received, the biometric information login process is carried out in which the biometric information is acquired via the controller and the login server information and the account information corresponding to the acquired biometric information are provided to the controller.

3. The system according to claim 2, wherein the controller includes:
a login monitoring unit for monitoring whether a login attempt is generated via a login means by monitoring the activated application;
a biometric information login registration determination unit for making a request to select one of the biometric information login registration and the biometric information login when the login attempt is generated and checking whether the selection is performed;
a registration unit for making a request for registration by transmitting the biometric information login registration request signal to the security processor and activating the biometric scanner and transmitting the biometric information acquired via the biometric scanner to the security processor upon generating the biometric scan request, when the biometric information login registration is selected via the biometric information login registration determination unit; and
a login processor for performing the automatic login by inputting account information in an account information input window of a login means currently displayed upon inputting the login server information and account information are input from the security processor, when the biometric information login is selected via the biometric login registration determination unit.

4. The system according to claim 1, wherein the biometric information is at least one of fingerprint information, voice feature information, vein information, facial feature information, retina information, and iris information.

5. A biometric information personal identity authenticating method using financial card information stored in a mobile communication terminal, the method comprising:
performing, by a login monitoring unit of a controller, a login attempt monitoring step of monitoring whether a login attempt is generated via a login means;
performing, by a biometric information login registration determination unit of the controller, a biometric information login registration determination step of determining whether the attempt is a biometric information simple login or a biometric information login registration when the login attempt is generated while monitoring the login attempt;
performing a biometric information registration step of carrying out a biometric information login registration process in which a registration unit of a controller transmits a biometric information login registration request signal to the security processor, biometric information acquired by activating a biometric scanner is transmitted to a security processor when generating a biometric scan request from the security processor, the security processor performs personal identity authentication via a card personal identity authentication server unit, a card company system, and an personal identity authentication agency, and the biometric information is mapped to login server information and account information and stored in a security area when the personal identity authentication is successful, when the biometric information login registration is determined as a result of the determination step; and
performing a biometric information simple login step of performing automatic login by causing a login processor of the controller to transmit a biometric information login request signal to the security processor, transmit biometric information acquired by activating the biometric scanner to the security processor when the biometric scan request is generated, and input the login server information and the account information received from the security processor in an account information input window of a login means currently displayed, when the biometric information simple login is determined as a result of the determination step.

6. The method according to claim 5, wherein the biometric information registration step includes:
performing, by the registration unit of the controller, a biometric information login request step of transmitting the biometric information login registration request signal when the biometric information login registration is determined as a result of the determination step;
performing, by the security processor, a biometric scan request step of implementing a biometric information authentication security application, acquiring the login server information and the account information of a login server that is to be logged into by the implemented biometric information authentication security application, and then making a request to the login processor to scan the biometric information, when a biometric login registration request signal is received from the login processor;
performing, by the registration unit, a biometric information provision step of transmitting biometric information obtained by activating the biometric scanner to the security processor when the biometric scan request is generated;
performing, by the security processor, a personal identity authentication carrying-out step of carrying out personal identity authentication via the card personal identity authentication server unit, the card company system, and the personal identity authentication agency and determining whether the identity authentication is successful or not in accordance with personal identity result information for personal identity authentication carried out by the personal identity authentication agency; and
performing, by the security processor, a registration step of inputting the biometric information and allowing the biometric information to be mapped to the login server information and the account information and stored when the personal identity authentication is successful in the personal identity authentication determination step.

7. The method according to claim 5, wherein the biometric information simple login step includes:
performing, by the login processor of the controller, a biometric information simple login request step of transmitting the biometric information login request signal to the security processor and making a request for the biometric information login when the biometric information simple login is determined as a result of the determination step;
performing, by the security processor, a login process information acquiring step of implementing biometric information authentication security application when making a request for biometric information login and making a request to the login processor for the biometric information scan by the implemented biometric information authentication security application;
performing, by the login processor, a biometric information provision step of receiving the biometric scan request form the security processor to activate the biometric scanner, and transmitting the biometric information acquired via the biometric scanner to the security processor;
performing, by the security processor, a login process information provision step of receiving the biometric information from the login processor and providing the login server information and the account information corresponding to the received biometric information from the login processor to the login processor; and
performing, by the login processor, a login step of performing the automatic login by inputting the login server information and the account information input from the security processor in the account information input window of the login means currently displayed.

8. The method according to claim 6, wherein the personal identity authentication carrying-out step includes:
performing, by the security processor, a registration card checking step of determining whether there is a digital financial card registered;
performing a card information provision step of transmitting digital financial card information including card information for the registered digital financial card to the card personal identity authentication server when there is the digital financial card, and transmitting physical financial card information including the card information acquired for the physical financial card via a financial card information reader including at least one of a near frequency communication (NFC), RF communication, and OCR, to the card personal identity authentication server when there is no the digital financial card;
performing, by the card personal identity authentication server, a personal identity request step of generating financial card personal identity authentication message including the received card information to be transmitted to the card company, and making a request for personal identity authentication;
performing, by the card company system, a primary authentication step of carrying out a primary card occupied authentication by checking whether personal identification information corresponding to the card information included in the financial card personal identity authentication message is registered in advance, and transmitting the personal identification information of financial card owner including occupied authentication success information (value) to the personal identity authentication agency so as to transmit the occupied authentication result information to the personal identity authentication agency when the occupied authentication is successful; and
performing, by the personal identity authentication agency, a secondary authentication step of receiving the occupied authentication result information according to the primary occupied authentication from the card company system, transmitting personal identity authentication failure to the mobile communication terminal via the card personal identity authentication server when the occupied authentication is not successful, checking whether personal identification information that is matched with the personal identification information received from the card company system is registered in advance when the occupied authentication is successful, thereby carrying out secondary personal identity authentication, and transmitting the personal identity authentication result to the security processor via the card personal identity authentication server.

9. The method according to claim 7, wherein the personal identity authentication request step includes:
a card type determination step of determining whether the received card information is the card information for the physical financial card;
an encryption determination step of checking whether the card information is encrypted when the card type is the physical financial card;
a decryption step of decrypting the encrypted card information when the card information is encrypted; and
a personal identity authentication message transmitting step of generating the financial card personal identity authentication message using the decrypted card information to be transmitted to the card company system.

10. The method according to claim 5, wherein the biometric information is at least one of fingerprint information, voice feature information, vein information, facial feature information, retina information, and iris information.
